# EUROPÄISCHE PATENTANMELDUNG

(11) **EP 3 360 667 A1**
(43) Veröffentlichungstag der Anmeldung: **15.08.2018**
(21) Anmeldenummer: 18156186.1
(22) Anmeldetag: 09.02.2018
(51) Int. Cl.: B29C 65/48, B29C 65/78, F03D 1/06, B29L 31/08

(54) **ROTORBLATTHINTERKANTEN-VERKLEBEWINKEL**

(30) Priorität: 14.02.2017 DE 102017001404
(71) Anmelder: Senvion GmbH, 22297 Hamburg (DE)
(72) Erfinder: BENDEL, Urs, 24787 Fockbek (DE); MESTER, Hendrik, 24118 Kiel (DE); EYB, Enno, 24116 Kiel (DE); FLACH, Christian, 24783 Osterrönfeld (DE)
(74) Vertreter: Groth, Wieland

(57) **Zusammenfassung**

Die Offenbarung betrifft ein Rotorblatt (1) mit einer aus zwei Rotorblattteilschalen ausgebildeten Rotorblatthinterkante (6), die in einem wurzelseitigen Abschnitt (12) ein abgeschnittenes Profil (14) mit einer Profilhinterkante (13) und in einem tipseitigen Abschnitt (16) ein spitz auslaufendes Profil (17) aufweist, wobei eine saugseitige Rotorblattteilschale (2) einen saugseitigen Teil der Profilhinterkante und eine druckseitige Rotorblattteilschale (3) einen druckseitigen Teil der Profilhinterkante (13) aufweist und die Rotorblattteilschalen (2, 3) eine Verklebungslinie (8) entlang der Rotorblatthinterkante (6) zwischen den Rotorblattteilschalen (2, 3) ausbilden. Die Offenbarung betrifft auch ein Verfahren zur Fertigung eines Rotorblattes (1) sowie eine Montageanordnung zur Anwendung in dem genannten Verfahren zur Herstellung des genannten Rotorblattes (1).

## Beschreibung

Die Erfindung betrifft ein Rotorblatt mit einer aus zwei Rotorblattteilschalen ausgebildeten Rotorblatthinterkante, die in einem wurzelseitigen Abschnitt ein abgeschnittenes Profil mit einer Profilhinterkante und in einem tipseitigen Abschnitt ein spitz auslaufendes Profil aufweist, wobei eine saugseitige Rotorblattteilschale einen saugseitigen Teil der Profilhinterkante und eine druckseitige Rotorblattteilschale einen druckseitigen Teil der Profilhinterkante aufweist und die Rotorblattteilschalen eine Verklebungslinie entlang der Rotorblatthinterkante zwischen den Rotorblattteilschalen ausbilden. Die Erfindung betrifft auch ein Verfahren zur Fertigung eines Rotorblattes sowie eine Montageanordnung zur Anwendung in dem genannten Verfahren zur Herstellung des genannten Rotorblattes.

In der DE 10 2014 203 936 A1 ist ein Verfahren zum Herstellen eines Rotorblattes offenbart. Das Rotorblatt weist einen wurzelnahen Bereich auf, in dem das Rotorblatt eine stumpfe Rotorblatthinterkante aufweist. Die stumpfe Rotorblatthinterkante geht zum tipseitigen Ende in eine spitz auslaufende Rotorblatthinterkante über. Beim Verkleben zweier Rotorblattteilschalen bestehen fertigungstechnische Schwierigkeiten beim Verkleben am Übergang von der stumpfen Rotorblatthinterkante zur spitzen Rotorblatthinterkante. In der genannten Druckschrift ist daher vorgesehen, Füllkörper entlang der stumpfen Rotorblatthinterkante anzubringen, wobei die Füllkörper im wurzelnahen Bereich im Querschnitt im Wesentlichen rechteckförmig ausgebildet sind und eine größere Höhe als Breite aufweisen und im tipnahen Bereich eine größere Breite als Höhe aufweisen und zum Tip hin schräg abfallend ausgebildet sind. Ein Füllkörper wird als Sandwichkern in die saugseitige Rotorblattteilschale und ein anderer Füllkörper als Sandwichkern in die druckseitige Rotorblattteilschale integriert. Beim Zusammenklappen der beiden Rotorblattteilschalen liegen die beiden Füllkörper einander gegenüber und können miteinander verklebt werden. Das Verfahren ist nachteiligerweise relativ aufwendig.

Darüber hinaus ist es bekannt, einen separat vorgefertigten Abschlusssteg zwischen die Halbschalen zu kleben, der die Halbschalen im Bereich des abgeschnittenen Hinterkantenprofils miteinander verbindet. Da der Abschlusssteg auch am tipseitigen Ende eine signifikante Bauhöhe besitzt, kann der Abschlusssteg nicht bis in die spitze Rotorblatthinterkante hinein eingebracht werden, und es entsteht ein Loch zwischen der Profilhinterkante und dem spitzen Profil, das z. B. mit Klebstoff gefüllt wird. Nachteiligerweise neigt der in der exothermen Reaktion aushärtende Klebstoff zur Rissbildung.

Es ist daher Aufgabe der vorliegenden Erfindung, ein Rotorblatt zur Verfügung zu stellen, das die oben genannten Nachteile vermeidet. In einem zweiten Aspekt ist es Aufgabe der Erfindung, ein Verfahren zur Herstellung eines Rotorblattes zur Verfügung zu stellen, das die oben genannten Nachteile vermeidet. In einem dritten Aspekt ist es Aufgabe der vorliegenden Erfindung, eine Montageanordnung zur Verfügung zu stellen, mit deren Hilfe das Verfahren zur Herstellung des Rotorblattes durchgeführt werden kann.

Die Aufgabe wird in ihrem ersten Aspekt durch ein eingangs genanntes Rotorblatt erfüllt, bei dem sich rotorblattinnenseitig der Verklebungslinie ein Hinterkantenstreifen in Rotorblattlängsrichtung erstreckt, der vollflächig mit den Innenseiten der beiden Rotorblattteilschalen verklebt ist und der sich zumindest entlang eines Abschnitts des abgeschnittenen Profils und zumindest entlang eines Abschnitts des spitz zulaufenden Profils erstreckt.

Das erfindungsgemäße Rotorblatt weist in einem wurzelseitigen Abschnitt ein abgeschnittenes Profil auf, das sich dadurch auszeichnet, dass eine Rotorblatthinterkante im Wesentlichen senkrecht zur Profilsehne, vorzugsweise exakt senkrecht zur Profilsehne abgeschnitten ist. Das abgeschnittene Profil weist eine Profilhinterkante auf, die im Wesentlichen oder vorzugsweise exakt senkrecht zur Sehne ausgeformt ist.

Das Rotorblatt weist in einem tipseitigen Abschnitt ein entlang der Profilsehne spitz auslaufendes Profil auf, das sich dadurch auszeichnet, dass sich eine saugseitige und eine druckseitige Rotorblattteilschale stetig aufeinander zubewegen und eine spitze Rotorblatthinterkante ausbilden. Das erfindungsgemäße Rotorblatt ist aus wenigstens zwei Rotorblattteilschalen oder zwei Rotorblattteilschalen ausgebildet, die vorzugsweise separat voneinander gefertigt werden und zur Ausbildung des Rotorblattes aufeinander- oder aneinandergesetzt werden und miteinander verklebt werden. Das Rotorblatt kann aus zwei Halbschalen gebildet werden, wobei eine saugseitige und eine druckseitige Halbschale separat voneinander gefertigt werden, es ist jedoch auch denkbar, dass das Rotorblatt in einer anderen Stückelung gefertigt wird, beispielsweise könnte eine Nase separat gefertigt werden und unabhängig davon eine saugseitige und eine druckseitige Teilschale. Die Klebelinie kann auch versetzt zur Profilsehne angeordnet sein.

Fertigungstechnisch ist der Übergang zwischen dem abgeschnittenen Profil und dem spitz auslaufenden Profil schwierig, da Rotorblattteilschalen nicht so exakt gefertigt werden können, dass sie beim Übereinanderschwenken wirklich entlang der ganzen Rotorblatthinterkante exakt übereinander zum Liegen kommen, sodass ein Versatz entlang einer Profilhinterkante im abgeschnittenen Profil und ein Loch im Übergang zwischen dem abgeschnittenen Profil und dem spitz auslaufenden Profil auftreten.

Zur Lösung dieser Probleme ist der erfindungsgemäße Hinterkantenstreifen vorgesehen, der innenseitig vorzugsweise vollflächig gegen die Verklebungslinie geklebt ist, wobei der Hinterkantenstreifen zumindest den Übergangsabschnitt zwischen spitz auslaufendem Profil und abgeschnittenem Profil entlang der Verklebungslinie der beiden Rotorblattteilschalen überdeckt. Eine Kontur der Außenseite des Hinterkantenstreifens stimmt mit einer Kontur der Innenseite der Rotorblattteilschale entlang der Verklebungslinie überein. Es bildet sich eine vollflächige, formschlüssige Verbindung aus.

Der Hinterkantenstreifen ist dazu in jedem seiner Querschnitte der zugehörigen Innenkontur der Rotorblattinnenwandung angepasst. Der Hinterkantenstreifen ist vorzugsweise in einem wurzelseitigen Abschnitt in einem Querschnitt senkrecht zur Längsrichtung rechteckig oder zumindest leicht gekrümmt rechteckig ausgebildet und in dem tipseitigen Abschnitt in einem Querschnitt senkrecht zur Längsrichtung V-förmig ausgebildet. Damit wird der Tatsache Rechnung getragen, dass der Hinterkantenstreifen entlang eines Wurzelabschnitts des Rotorblattes, das dort in einem Querschnitt kreisförmig ausgebildet ist und dabei Durchmesser von mehreren Metern aufweisen kann, bei einer eigenen Breite von 10 cm, 20 cm, 30 cm und möglicherweise einer anderen Breite zwischen den genannten Werten, eine kaum wahrnehmbare, leichte Krümmung aufweist, die der Krümmung der Innenseite der Rotorblattschale im Wurzelabschnitt entspricht. Im tipseitigen Abschnitt ist der Hinterkantenstreifen innen in die spitz zulaufende Rotorblatthinterkante eingefügt und daher im Wesentlichen V-förmig ausgebildet.

Vorzugsweise verändern sich Querschnitte vom rechteckigen zum V-förmigen Querschnitt stetig über einen U-förmigen Querschnitt. Dabei ist U-förmig nicht im strengen Sinne einer U-Form zu verstehen, sondern es sind damit auch wannenförmige Querschnitte und asymmetrische U-förmige Querschnitte umfasst. Der Querschnitt ist vorzugsweise so ausgebildet, dass eine Außenkontur des Hinterkantenstreifens einer Innenkontur des Rotorblattes entlang der Verklebungslinie angepasst ist, derart, dass eine Außenseite des Hinterkantenstreifens vollflächig auf der Innenwandung des Rotorblattes entlang der Verklebungslinie aufliegt. Da die Bauhöhe der Profilhinterkante zum tipseitigen Ende des Rotorblattes abnimmt und der Hinterkantenstreifen dieser Veränderung Rechnung trägt, wird der U-Boden des U-förmigen Profils zum tipseitigen Ende hin dünner, während die U-Seiten des U-förmigen Profils zunehmend länger werden.

In einer besonders bevorzugten Ausführungsform der Erfindung weist der Hinterkantenstreifen im wurzelseitigen Abschnitt eine Biegeversteifung auf. Die Biegeversteifung beginnt dabei günstigerweise in Längsrichtung erst nach dem Wurzelabschnitt und einer Verbreiterung in einem aerodynamischen Abschnitt, und zwar in einem Abschnitt, in dem der Hinterkantenstreifen bereits entlang des abgeschnittenen Profils mit der Profilhinterkante verläuft. Die Biegeversteifung verläuft günstigerweise also nicht entlang des im Querschnitt kreisförmigen Wurzelabschnitts und nicht entlang der Verschwingung vom Wurzelabschnitt zum aerodynamischen Bereich des Rotorblattes. Die Biegeversteifung erstreckt sich entlang zumindest eines Teils der Ausdehnung des abgeschnittenen Profils in Längsrichtung, aber nicht notwendigerweise über die gesamte Längsausdehnung des abgeschnittenen Profils.

Besonders bevorzugt ist die Biegeversteifung als Sandwichkern zwischen wenigstens zwei Laminatlagen ausgeformt. Der Sandwichkern ist allgemein eine spezielle Form einer Biegeversteifung, die den Zweck hat, dass der Hinterkantenstreifen in Längsrichtung keine Wellen ausbildet. Die Gefahr der Wellenbildung entsteht insbesondere bei einem Heranziehen des Hinterkantenstreifens an die Innenseiten der Rotorblattteilschalen durch punktuelle auf den Hinterkantenstreifen wirkende Zugkräfte.

Vorzugsweise ist der Hinterkantenstreifen mehrlagig aufgebaut, günstigerweise weist er wenigsten zwei unmittelbar aufeinanderliegende Winkellagen auf und wenigstens eine UD-Lage; unter Winkellagen sind hierbei Gelege- oder Gewebelagen zu verstehen.

Eine Gelegelage weist eine Hauptfaserrichtung auf, die in einem bestimmten Winkel zur Längsrichtung angeordnet ist, vorzugsweise weist der Hinterkantenstreifen zwei ± 45°-Gelegelagen auf, die direkt aufeinanderlaminiert sind. Dadurch erhält das Laminat eine besonders hohe Festigkeit.

Statt der zwei Gelegelagen kann auch eine Gewebelage mit zwei Hauptfaserrichtungen verwendet werden, wenn die Hauptfaserrichtungen in einem entsprechenden Winkel zueinander angeordnet sind, insbesondere wenn die beiden Hauptfaserrichtungen einen Winkel von 90° zueinander aufweisen und derart in den Hinterkantenstreifen eingefügt werden, dass die Hauptfaserrichtungen in einem Winkel von ± 45° zur Längsrichtung angeordnet sind.

Die zwei Gelege- bzw. die eine Gewebelage kann von wenigstens einer UD-Lage benachbart sein, die UD-Lage weist eine Hauptfaserrichtung in Längsrichtung auf; unter Hauptfaserrichtung wird hierbei eine Faserrichtung verstanden, entlang derer wenigstens 90 %, vorzugsweise wenigstens 95 % aller Fasern der Lage angeordnet sind.
Bei den Fasern kann es sich um Kunststofffasern, Glasfasern oder auch Kohlenstofffasern handeln.

In einer besonders bevorzugten Ausführungsform der Erfindung sind innenseitig und außenseitig der Biegeversteifung zumindest eine UD-Lage und jeweils eine Gewebelage bzw. jeweils zwei aufeinanderliegende Gelegelagen angeordnet, wobei die UD-Lagen günstigerweise auf der der Biegeversteifung abgewandten Seite der Gelegelagen bzw. der Gewebelage vorgesehen sind.

Die Gelegelagen können sich über die gesamte Längsausdehnung des Hinterkantenstreifens erstrecken, sie können jedoch auch nur abschnittsweise oder entlang eines einzelnen Abschnittes des Hinterkantenstreifens verlaufen. Günstigerweise wird der Hinterkantenstreifen von der Wurzel zum Tip hin dünner, weist also zunehmend weniger Winkellagen auf.

Die Aufgabe wird in ihrem zweiten Aspekt durch ein Verfahren mit den Merkmalen des Anspruchs 9 gelöst. Das erfindungsgemäße Verfahren eignet sich insbesondere zur Herstellung eines der oben beschriebenen Rotorblätter.

Dabei werden zwei Rotorblattteilschalen gefertigt, die Rotorblattteilschalen aufeinandergefügt und innenseitig einer Verklebungslinie beider Rotorblattteilschalen ein Hinterkantenstreifen angeordnet. Der Hinterkantenstreifen wird mit Seilen verbunden, die durch die Verklebungslinie von innen nach außen gezogen werden, und der Hinterkantenstreifen wird mittels der Seile an die Innenseiten beider Rotorblattteilschalen entlang der Verklebungslinie gezogen und der Hinterkantenstreifen wird an die Innenseiten der Rotorblattteilschalen geklebt.

Das erfindungsgemäße Verfahren macht von der Idee Gebrauch, den sich über den vorzugsweise einstückig, möglicherweise auch mehrstückig ausgebildeten Hinterkantenstreifen von innen an die Innenseiten der Rotorblattteilschalen zu drücken und dadurch die Verklebungslinie von innen zum einen abzukleben, zum anderen aber auch die Rotorblattteilschalen zumindest im Wurzelbereich und im wurzelseitigen Abschnitt der Profilhinterkante gegeneinander zu positionieren, derart, dass insbesondere entlang der Profilhinterkante eine bündige Rotorblattaußenfläche entsteht und der Übergangsabschnitt zwischen abgeschnittenem Profil und spitz auslaufendem Profil von innen durch den Hinterkantenstreifen abgeschlossen und verklebt wird, wobei auf separate Andrückeinrichtungen, die nach der Montage wieder entfernt werden müssen, im Inneren des Rotorblattes verzichtet werden kann, da der Hinterkantenstreifen von außen mittels Seilen gegen die Rotorblattinnenwandung gezogen wird.

Dazu ist vorzugsweise der Hinterkantenstreifen in Längsrichtung mit voneinander beabstandeten Löchern versehen, durch die jeweils ein Seilende gezogen wird, das jeweils innenseitig mit einem Knebel verknotet wird, und das jeweils andere Seilende wird durch die Verklebungslinie hindurchgezogen und mit einem Aktuator verbunden. Der Hinterkantenstreifen ist dazu vorzugsweise, wie oben beschrieben, in Längsrichtung durch Biegeversteifungen, wie beispielsweise einen oder mehrere Sandwichkerne, versteift, sodass durch das punktuelle Anziehen des Hinterkantenstreifens mittels der Aktuatoren, die eine Kraft auf die Knebel an den Löchern ausüben, einer Durchbiegung des Hinterkantenstreifens zwischen den Löchern nach rotorblattinnenseitig entgegengewirkt wird, und dadurch wird eine weitestgehend gleichmäßige Kraftverteilung in Richtung der Rotorblatthinterkante durch die punktuelle Kraftausübung der Seile über den gesamten Hinterkantenstreifen hervorgerufen.

Besonders bevorzugt ist einer, vorzugsweise jeder der Aktuatoren über einen Flaschenzug mit dem anderen Seilende verbunden. Der Flaschenzug ermöglicht es, den kurzen Hub des Aktuators in eine längere Bewegung des einen Seilendes, an dem der Knebel angeordnet ist, umzuwandeln. Es hat sich herausgestellt, dass beim Anziehen des Hinterkantenstreifens an die Rotorblattinnenwandung Strecken von über 20 cm und mehr zurückgelegt werden müssen, die für die herkömmlich verwendeten Aktuatoren zu lang sind.

Die Aktuatoren sind vorzugsweise gemeinsam gesteuert, es ist auch durchaus denkbar, dass die Flaschenzüge und anderen Seilenden so miteinander verknotet und kombiniert sind, dass nur ein Aktuator oder weniger Aktuatoren als Seile verwendet werden müssen.

In ihrem dritten Aspekt wird die Aufgabe durch eine Montageanordnung mit den Merkmalen des Anspruchs 12 gelöst. Die Montageanordnung eignet sich insbesondere zur Fertigung eines der oben beschriebenen Rotorblätter und auch zur Durchführung eines der oben beschriebenen Verfahren.

Die Montageanordnung weist zwei aufeinander angeordnete Rotorblattteilschalen, die eine Verklebungslinie zwischen sich ausbilden, auf und eine Mehrzahl von entlang eines Hinterkantenstreifens in den Hinterkantenstreifen eingebrachten Löchern, durch die jeweils ein Seil gezogen ist, das innenseitig mit einem Knebel versehen und außenseitig mit einem Aktuator verbunden ist, und das Seil ist durch die Verklebungslinie von innen nach außen geführt, und der Aktuator ermöglicht ein Andrücken des Hinterkantenstreifens an der Rotorblattinnenwandung. Die Montageanordnung ist zur Durchführung eines oder mehrerer der oben genannten Verfahren geeignet, günstigerweise weist die Montageanordnung einen oder mehrere der oben genannten Flaschenzüge auf.

Die Erfindung wird anhand eines Ausführungsbeispiels in neun Figuren beschrieben, dabei zeigen:
- Fig. 1: eine perspektivische Ansicht eines erfindungsgemäßen Rotorblattes,
- Fig. 2: eine Ansicht eines erfindungsgemäßen Hinterkantenstreifens in einer Ansicht von der Rotorblattinnenseite,
- Fig. 2a: eine Schnittansicht entlang der Linie A-A in Fig. 2,
- Fig. 2b: eine Schnittansicht entlang der Linie B-B in Fig. 2,
- Fig. 2c: eine Schnittansicht entlang der Linie C-C in Fig. 2,
- Fig. 2d: eine Schnittansicht entlang der Linie D-D in Fig. 2,
- Fig. 2e: eine Schnittansicht entlang der Linie E-E in Fig. 2,
- Fig. 3: eine Explosionsansicht des schematischen Aufbaus des Hinterkantengurtes im rotorblattwurzelseitigen Abschnitt,
- Fig. 4: eine schematische Darstellung eines zur Verklebung geschlossenen Rotorblatts mit Hinterkantenstreifen und Zugeinrichtung, Seil, Knebel und Aktuator.

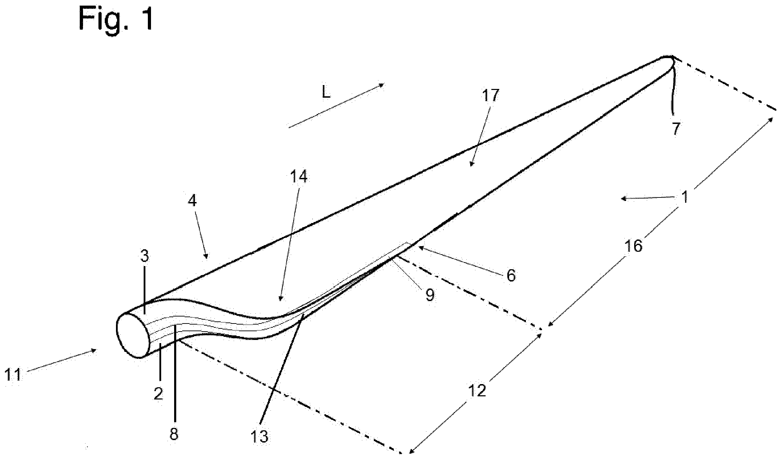

In Fig. 1 ist ein Rotorblatt 1 einer Windenergieanlage in einer perspektivischen Ansicht schematisch dargestellt. Das Rotorblatt 1 weist zwei Rotorblatthalbschalen, nämlich eine untere saugseitige Rotorblatthalbschale 2 und eine obere druckseitige Rotorblatthalbschale 3 auf, die an einer Rotorblattvorderkante 4 und an einer Rotorblatthinterkante 6 miteinander in einer Längsrichtung L entlang einer Verklebungslinie verklebt sind. Eine einem Tip 7 am Rotorblatt 1 gegenüberliegende Rotorblattwurzel 11 ist zur Montage an einer Rotornabe der Windenergieanlage bestimmt. Das Rotorblatt 1 weist eine Rotorblattinnenseite und eine Rotorblattaußenseite auf; rotorblattinnenseitig ist entlang einer Verklebungslinie 8 ein erfindungsgemäßer Hinterkantenstreifen 9 aufgeklebt, der die beiden Rotorblatthalbschalen 2, 3 kraftschlüssig miteinander verbindet.

Das Rotorblatt 1 ist in Querschnitten senkrecht zur Längsrichtung L je nach Lage des Querschnittes sehr unterschiedlich ausgebildet. An der Rotorblattwurzel 11 ist der Querschnitt kreisförmig, während der Querschnitt in einem wurzelseitigen Abschnitt 12 ein aerodynamisches Profil aufweist, dessen Profilhinterkante 13 jedoch abgeschnitten ist. Dieses Profil wird hier auch als abgeschnittenes Profil 14 bezeichnet. Das abgeschnittene Profil 14 erstreckt sich etwa entlang eines Drittels der Längsausdehnung des Rotorblattes ausgehend von der Rotorblattwurzel 11. In einem tipseitigen Abschnitt 16, der sich dem abgeschnittenen Profil 14 anschließt, ist das Rotorblatt 1 zur Rotorblatthinterkante hin spitz auslaufend ausgebildet, dieses Profil wird hier auch als spitz auslaufendes Profil 17 bezeichnet.

Problematisch für die Verklebung der beiden Rotorblatthalbschalen 2, 3 entlang der Verklebungslinie 8 der Rotorblatthinterkante 6 ist der Übergang vom abgeschnittenen Profil 14 zum spitz zulaufenden Profil 17. Im vorliegenden Fall werden die Rotorblatthalbschalen 2, 3 zunächst in einem Vakuuminfusionsverfahren vorgefertigt, jede der beiden Rotorblatthalbschalen 2, 3 weist dabei entlang des abgeschnittenen Profils 14 etwa die Hälfte der Bauhöhe der Profilhinterkante 13 auf, wobei die beiden halben Profilhinterkanten beim Zusammenkleben der Rotorblatthalbschalen 2, 3 exakt übereinander positioniert werden und zusammen die Rotorblatthinterkante 13 im wurzelseitigen Abschnitt 12 der abgeschnittenen Profile 14 ausbilden.

Der erfindungsgemäße Hinterkantenstreifen 9 erstreckt sich ausgehend von der Rotorblattwurzel 11 etwa entlang eines Drittels der Längsausdehnung des Rotorblattes 1, der Hinterkantenstreifen 9 erstreckt sich dabei insbesondere entlang des Abschnittes des abgeschnittenen Profils 14 und des Überganges des abgeschnittenen Profils 14 in den Abschnitt des spitz auslaufenden Profils 17 hinein.

Es hat sich bei herkömmlichen Rotorblättern gezeigt, dass gerade der Übergang zwischen dem abgeschnittenen Profil 14 zum spitz auslaufenden Profil 17 bei der Verklebung der Rotorblatthalbschalen schwierig zu fertigen ist, zum einen weil die beiden Teile der Rotorblatthinterkante 13 exakt senkrecht übereinander positioniert werden müssen, bevor sie verklebt werden, damit kein Versatz entlang der Bauhöhe der Rotorblatthinterkante 13 auftritt. Diese exakte Positionierung ist praktisch jedoch ausgesprochen problematisch, da die Rotorblätter 1 Längen von bis zu 70 Metern und sogar darüber hinaus aufweisen und die Rotorblatthalbschalen 2, 3 in sich nicht vollständig biegesteif sind, sondern flexibel.
Zum anderen ist eine Fertigung der Rotorblatthalbschalen 2, 3 beim Übergang zwischen dem abgeschnittenen und dem spitz auslaufenden Profil 14, 17 nicht in der Weise möglich, dass beim Aufeinanderfügen der beiden Rotorblatthalbschalen 2, 3 eine vollständig geschlossene Rotorblattaußenhaut entsteht, sondern vielmehr bildet sich an dem Übergang zwischen den beiden Profilen 14, 17 ein Loch aus, das eine Länge von bis zu 20 cm, teilweise sogar darüber hinaus aufweisen kann und separat mittels Klebstoff verklebt werden muss.

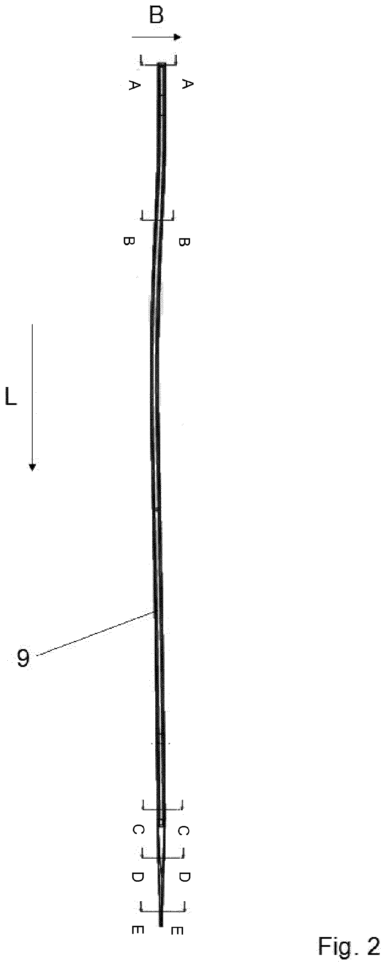

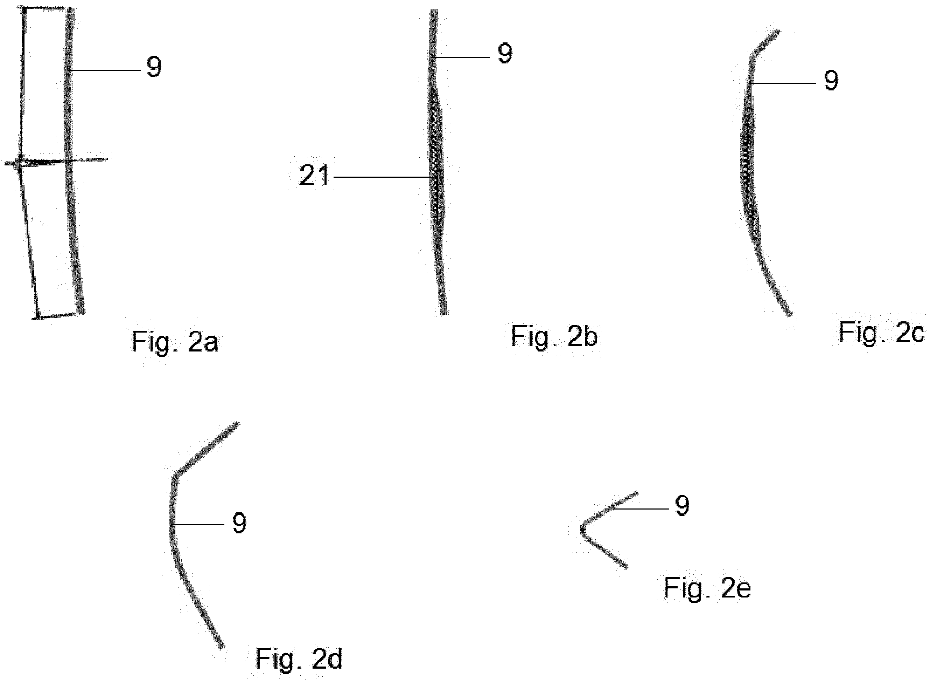

Der erfindungsgemäße Hinterkantenstreifen 9 kann beide Fertigungsprobleme in kostengünstiger und bequemer Weise lösen. Der Hinterkantenstreifen 9 ist in Fig. 2 in einer Ansicht von rotorblattinnenseitig nach rotorblattaußenseitig entlang der Verklebungslinie 8 dargestellt, die Verschwingung im Bereich der Rotorblattwurzel 11 zum abgeschnittenen Profil 14 ist nicht zu erkennen, der Hinterkantenstreifen 9 weist eine Länge von knapp 30 Metern auf, er kann jedoch auch länger oder kürzer ausgebildet sein, das hängt natürlich von der Baulänge des Rotorblattes 1 selbst ab und/oder der Positionierung und Länge des abgeschnittenen Profils 14 des jeweiligen Rotorblattes 1.

Eine Breite B des Hinterkantenstreifens 9 beträgt zwischen 20 cm bis 60 cm. Der Hinterkantenstreifen 9 ist ein Laminatbauteil, das in Abschnitten auch einen vorzugsweise zusammenhängenden Sandwichkern 21 aufweisen kann, und der Aufbau des Hinterkantenstreifens 9 ist entlang der Längsausdehnung des Hinterkantenstreifens 9 unterschiedlich.

In den Fig. 2a-2e sind Querschnitte des Hinterkantenstreifens 9 an verschiedenen Punkten dargestellt. Dabei ist erkennbar, dass der Hinterkantenstreifen 9 sowohl hinsichtlich seiner äußeren Gestalt als auch hinsichtlich des Aufbaus entlang der Längsausdehnung in Längsrichtung L variiert.

Entlang der gesamten Ausdehnung des Hinterkantenstreifens 9 ist eine Auflagefläche des Hinterkantenstreifens 9 an der Rotorblattinnenseite der Kontur der Rotorblattinnenseite angepasst. Eine Außenseite des Hinterkantenstreifens 9 liegt flächig, vorzugsweise vollflächig auf der Innenseite der Rotorblatthalbschalen 2, 3 entlang der Verklebungslinie 8 auf. In einem rotorblattwurzelnahen Abschnitt, der exemplarisch durch einen Schnitt entlang der Linie A-A dargestellt ist, weist der Hinterkantenstreifen 9 über seine gesamte Breite B eine gleichmäßige, geringe Krümmung auf, die der geringen Krümmung der Rotorblattwurzel 11 angepasst ist. Der rotorblattnahe Abschnitt umfasst den im Querschnitt kreisförmigen Wurzelabschnitt und den Abschnitt der Verbreiterung des Rotorblattes vom Wurzelabschnitt zum abgeschnittenen Profil 14.

In einem Querschnitt B-B senkrecht zur Längsrichtung L des Hinterkantenstreifens 9, der sich im Abschnitt der Profilhinterkante 13 befindet, beinhaltet der Hinterkantenstreifen 9 den Sandwichkern 21. Der Sandwichkern 21 bewirkt eine deutlich erhöhte Biegesteifigkeit des Hinterkantenstreifens 9 in Längsrichtung L.

Entlang eines Querschnittes entlang der Linie C-C in Fig. 2 ist der Hinterkantenstreifen 9 leicht U-förmig oder wannenförmig ausgebildet, und er weist nach wie vor einen Sandwichkern 21 auf. Der Sandwichkern kann als Schaumkern ausgebildet sein. Die U-Form trägt der Tatsache Rechnung, dass die Profilhinterkante eine zum Tip 7 des Rotorblattes 1 hin zunehmend geringere Bauhöhe aufweist, sodass der Hinterkantenstreifen 9 breiter ist als die Höhe der Profilhinterkante 13 und damit an seinen Längsrändern nach innen abgewinkelt ausgebildet werden muss. Die Mindestbreite des Hinterkantenstreifens 9 ergibt sich aus der zu übertragenden Schubkraft zwischen den Rotorblatthalbschalen 2, 3 und der anzunehmenden Festigkeit der Verklebung zwischen dem Hinterkantenstreifen 9 und den Rotorblatthalbschalen 2, 3 und ist im tipseitigen Abschnitt des Hinterkantenstreifens 9 größer als an der Profilhinterkante 13. In einem Abschnitt kurz vor dem Übergang zum spitz auslaufenden Profil 17 weist der Hinterkantenstreifen 9 keinen Sandwichkern 21 mehr auf, weil das Profil eine starke Krümmung bzw. zunehmend stärkere U-Form aufweist. In diesem Abschnitt wird eine Biegesteifigkeit des Hinterkantenstreifens 9 durch die Ausformung des Hinterkantenstreifens 9 selbst erzeugt.

In dem Abschnitt entlang des spitz auslaufenden Profils 17, der exemplarisch im Querschnitt entlang der Linie D-D, die gemäß Fig. 2d dargestellt ist, ist der Hinterkantenstreifen 9 U-förmig ausgebildet. Im Querschnitt entlang der Linie E-E, die gemäß Fig. 2e dargestellt ist, ist der Hinterkantenstreifen 9 V-förmig ausgebildet, und es ist ebenfalls kein Sandwichkern 21 mehr vorhanden; der Hinterkantenstreifen 9 wird über seine gesamte Längsausdehnung mit beiden Rotorblatthalbschalen 2, 3 in jedem Querschnitt verklebt. Dadurch wird zum einen die Verklebungslinie 8 dort geschlossen, zum anderen werden die beiden Rotorblatthalbschalen 2, 3 relativ zueinander exakt positioniert.

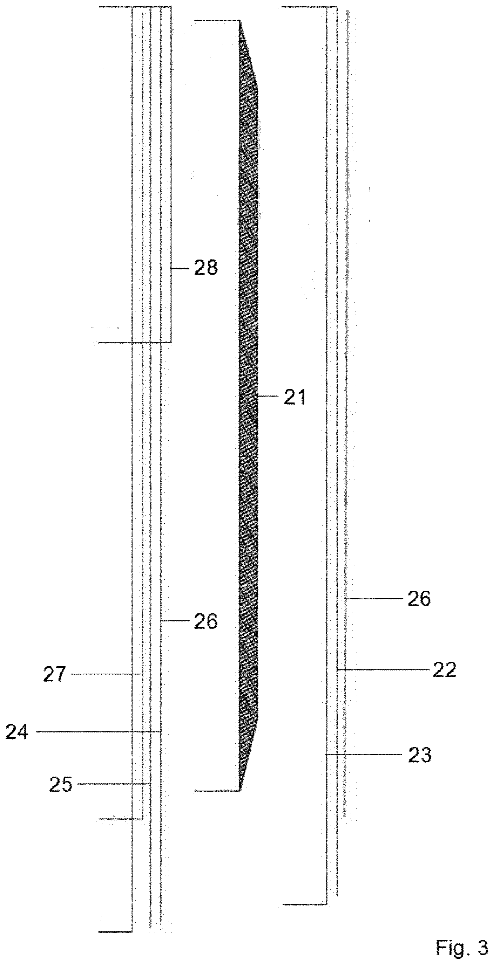

Im Bereich der Rotorblattwurzel 11 des Rotorblattes 1 ist der Hinterkantenstreifen 9 entlang seiner Breite B in einem geringen Maße, vorzugsweise gleichmäßig gekrümmt; der Hinterkantenstreifen 9 weist im Abschnitt der Profilhinterkante 13 zusätzlich den Sandwichkern 21 auf. Der Sandwichkern 21 umfasst einen Balsa-, einen PVC- oder einen anderen Kunststoffschaum, der zwischen Gelegelagen, insbesondere ±45°Gelegelagen (24, 25) und UD-Lagen (26, 27) auf der Innenseite und Gelegelagen, insbesondere ±45°Gelegelagen (22, 23) und UD-Lagen (26, 27) auf der Außenseite eingebracht ist; dieser Aufbau ist schematisch in Fig. 3 dargestellt. Rotorblattaußenseitig weist der Hinterkantenstreifen 9 zwei ±45°-Gelegelagen 24, 25 und eine UD-Lage 27 und rotorblattinnenseitig ebenfalls zwei ±45°-Gelegelagen 22, 23 und eine UD-Lage 26 auf, die sowohl innen- als auch außenseitig weiter beabstandet vom Sandwichkern 21 angeordnet sind als die beiden ±45°-Gelegelagen 22, 23. Der Sandwichkern 21 ist entlang der Breite B an den äußeren Kanten abgeschrägt.

Der Hinterkantenstreifen 9 umfasst innenseitig des Sandwichkerns 21 die zwei innenseitigen ±45°-Gelegelagen 22, 23, die in einem Harzinfusionsverfahren miteinander verklebt werden. Der Hinterkantenstreifen 9 umfasst außenseitig des Sandwichkerns 21 die zwei außenseitigen ±45°-Gelegelagen 24, 25, die in einem Harzinfusionsverfahren ebenfalls miteinander verklebt werden.

Bei Gelegelagen handelt es sich um Faserhalbzeuge, die eine oder mehrere Schichten von Fasern enthalten, wobei in jeder der Schichten die Fasern in Bündeln, so genannten Rovingsträngen nebeneinander, vorzugsweise parallel zueinander angeordnet sind. Die Faserbündel können insbesondere aus Glasfasern oder Kunststofffasern, möglicherweise auch aus Kohlefasern oder Mischungen dieser Fasern bestehen. Die Fasern sind quer zu ihrer Längsausrichtung durch Haltefäden miteinander verbunden und/oder miteinander verklebt. Entlang des Hinterkantenstreifens 9 werden zwei ±45°-Gelegelagen 22, 23, 24, 25 direkt übereinandergelegt, wobei in den ±45°-Gelegelagen 22, 23, 24, 25 je eine Faserlage in einem Winkel von + 45° und je eine Faserlage in einem Winkel von - 45° zur Längsrichtung L des Hinterkantenstreifens 9 angeordnet ist. Zusätzlich ist auf den beiden unmittelbar aufeinandergelegten ±45°-Gelegelagen 22, 23, 24, 25 jeweils die UD-Lage 26, 27 angeordnet. Die UD-Lagen 26, 27 sind jeweils auf der dem Sandwichkern 21 abgewandten Seite der beiden ±45°-Gelegelagen 22, 23, 24, 25 angeordnet. Eine UD-Lage 26, 27 ist ein unidirektionales Gelege oder Gewebe, d. h., etwa 90 %, vorzugsweise 95 % der Fasern der UD-Lagen 26, 27 sind in einer Richtung parallel zueinander oder nebeneinander in der Längsrichtung L der ±45°-Gelegelagen 22, 23, 24, 25 angeordnet, die UD-Lagen 26, 27 sind in Längsrichtung L des Hinterkantenstreifens 9 ausgerichtet. Es ist denkbar, dass mehrere Paare von unmittelbar aufeinander angeordneten ± 45°-Gelegelagen 22, 23, 24, 25 in dem Hinterkantenstreifen 9 vorgesehen werden, es können auch eine, zwei oder mehr UD-Lagen 26, 27 vorgesehen sein. Die Lagen 22, 23, 24, 25, 26, 27 können sich über die gesamte Längsausdehnung des Hinterkantenstreifens 9 erstrecken, es ist jedoch auch denkbar, dass sich einige oder mehrere kurze Lagen 28 nur über eine oder mehrere Abschnitte des Hinterkantenstreifens 9 erstrecken. In Fig. 3 ist die kurze Lage 28 in einem wurzelnahen Abschnitt des Hinterkantenstreifens 9 angeordnet.

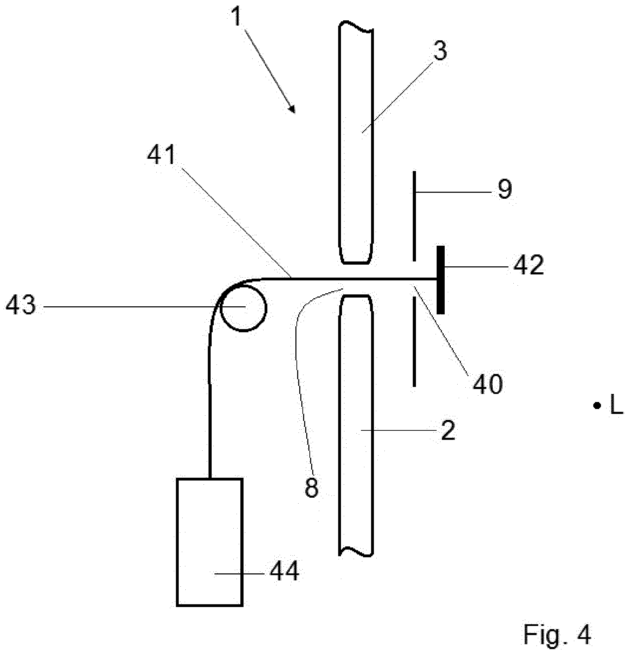

In Fig. 4 ist eine Montageanordnung für den Hinterkantenstreifen 9 dargestellt. Dabei wird zunächst der Hinterkantenstreifen 9 mit voneinander entlang der Längsrichtung L beabstandeten Löchern 40 versehen, durch die ein Seil 41 gezogen wird, das an einem innenseitigen Ende mit einem Knebel 42 verknotet wird, um ein Durchrutschen durch das Loch 40 zu verhindern, rotorblattaußenseitig wird das Seil 41 über eine Rolle 43 geführt und mit einem Aktuator 44 verbunden. Die Anordnung ist in Fig. 4 dargestellt. Durch Betätigen des Aktuators 44 ist es möglich, den Hinterkantenstreifen 9 innenseitig auch bei geschlossener Rotorblattschale 1 unter Kraft gegen die Innenseite der beiden Rotorblatthalbschalen 2, 3 zu drücken. Dabei wird die zwischen den Rotorblatthalbschalen 2, 3 und dem Hinterkantenstreifen 9 platzierte Klebstoffpaste mit relativ hoher Viskosität (nicht dargestellt) teilweise verdrängt und auf die gesamte Breite des Hinterkantenstreifens 9 verteilt. So wird die Verklebung zwischen den Rotorblatthalbschalen 2, 3 und dem Hinterkantenstreifen 9 hergestellt. Für die Anbringung des Hinterkantenstreifens 9 mittels der in Fig. 4 dargestellten Montageanordnung ist es wesentlich, dass der Hinterkantenstreifen 9 eine hinreichende Biegesteifigkeit in Längsrichtung L aufweist, da die Löcher 40 entlang des Hinterkantenstreifens 9 bevorzugt einen Abstand von etwa 1 m bis 2 m aufweisen und der Hinterkantenstreifen 9 somit nur punktuell gegen die Rotorblattinnenwandung gezogen wird. Aufgrund der hinreichenden Biegesteifigkeit des Hinterkantenstreifens 9 wird auch der Bereich zwischen zwei benachbarten Löchern 40 bzw. zwei benachbarten Montageanordnungen unter hinreichender Kraft gegen die Rotorblattinnenwandung gedrückt, die Klebstoffpaste verdrängt und ein wellenförmiges Durchbiegen des Hinterkantenstreifens 9 in Richtung des Rotorblattinnenraumes weitestgehend verhindert, sodass sich auf der gesamten Länge das gewünschte Spaltmaß der Verklebung von bevorzugt 1 mm - 15 mm zwischen den Rotorblatthalbschalen 2, 3 und dem Hinterkantenstreifen 9 einstellt.

In einer nicht dargestellten Ausführungsform sind die Aktuatoren 44 über jeweils einen Flaschenzug mit jeweils dem äußeren Seilende verbunden. Jeder Aktuator 44 ist fest mit einem (nicht dargestellten) Gestell der unteren Halbschalenform verbunden, und die Aktuatoren 44 sind in Längsrichtung L voneinander beabstandet angeordnet, derart, dass die Löcher 40 entlang des Hinterkantenstreifens 9 erdbodenabseitig oberhalb jeweils eines Aktuators 44 vorgesehen sind. Der Flaschenzug ermöglicht es, den kurzen Hub des Aktuators 44 in eine längere Bewegung des innenseitigen Seilendes umzuwandeln. Der Hinterkantenstreifen 9 muss in einigen Abschnitten über Strecken von 20 cm oder mehr Zentimetern bewegt werden, um eng an die Rotorblattinnenschale gezogen werden zu können. Während des Herstellungsverfahrens werden zunächst eine saugseitige Rotorblatthalbschale 2 und eine druckseitige Rotorblatthalbschale 3 gefertigt, dann wird der Hinterkantenstreifen 9 mit Löchern 40 versehen und in die saugseitige Rotorblatthalbschale 2 in etwa an der eingebauten Position, aber beabstandet von der Rotorblattinnenwandung, eingelegt. Durch den Hinterkantenstreifen 9 werden die Seile 41 durch die Löcher 40 hindurchgeführt und innenseitig mit Knebeln 42 verknotet. Die Seile 41 werden dann über die Verklebungslinie 8 der saugseitigen Rotorblatthalbschale (2) nach außen gelegt und mit dem Aktuator 44 über einen Flaschenzug verbunden. Anschließend wird auf die Verklebungslinie 8 ein Klebstoff aufgebracht und die druckseitige Rotorblatthalbschale 3 über die saugseitige Rotorblatthalbschale 2 geklappt, sodass die beiden Ränder der Rotorblatthalbschalen 2, 3 übereinanderpositioniert und miteinander verklebt werden. Bevor das Klebemittel abgebunden ist, werden die Aktuatoren 44 betätigt, und der Hinterkantenstreifen 9 wird von innen an die Innenseite der beiden Rotorblatthalbschalen 2, 3 gezogen. Vorher wird die Außenseite des Hinterkantenstreifens 9 ebenfalls mit einem Klebmittel versehen. Der Hinterkantenstreifen 9 wird solange an die Innenseite der Rotorblatthalbschalen 2, 3 gedrückt, bis der Klebstoff abgebunden ist, dann werden die Seile 41 unmittelbar an der Rotorblattaußenhaut abgeschnitten.

### Bezugszeichenliste

- 1: Rotorblatt
- 2: saugseitige Rotorblatthalbschale
- 3: druckseitige Rotorblatthalbschale
- 4: Rotorblattvorderkante

- 6: Rotorblatthinterkante
- 7: Tip
- 8: Verklebungslinie
- 9: Hinterkantenstreifen

- 11: Rotorblattwurzel
- 12: wurzelseitiger Abschnitt
- 13: Profilhinterkante
- 14: abgeschnittenes Profil

- 16: tipseitiger Abschnitt
- 17: spitz auslaufendes Profil

- 21: Sandwichkern
- 22, 23: Gelegelagen
- 24, 25: Gelegelagen
- 26, 27: UD-Lagen
- 28: kurze Lage

- 40: Löcher
- 41: Seile
- 42: Knebel
- 43: Rolle
- 44: Aktuator

- L: Längsrichtung
- B: Breite

## Patentansprüche

1. Rotorblatt (1) mit einer aus zwei Rotorblattteilschalen (2, 3) mit einer Rotorblattvorderkante (4) und einer Rotorblatthinterkante (6), die in einem wurzelseitigen Abschnitt (12) ein abgeschnittenes Profil (14) und in einem tipseitigen Abschnitt (16) ein spitz auslaufendes Profil (17) aufweist, wobei eine saugseitige Rotorblattteilschale (2) einen saugseitigen Teil einer Profilhinterkante (13) und eine druckseitige Rotorblattteilschale (3) einen druckseitigen Teil der Profilhinterkante (13) aufweist und eine Verklebungslinie (8) entlang der Rotorblatthinterkante (6) zwischen den Rotorblattteilschalen (2, 3) ausgebildet ist,
**dadurch gekennzeichnet, dass** sich rotorblattinnenseitig der Verklebungslinie (8) ein Hinterkantenstreifen (9) in Rotorblattlängsrichtung erstreckt, der vollflächig mit den Innenseiten der beiden Rotorblattteilschalen (2, 3) verklebt ist und der sich zumindest entlang eines Abschnitts des abgeschnittenen Profils (14) und zumindest entlang eines Abschnitts des spitz auslaufenden Profils (17) erstreckt.

2. Rotorblatt (1) nach Anspruch 1,
**dadurch gekennzeichnet, dass** der Hinterkantenstreifen (9) im wurzelseitigen Abschnitt (12) in einem Querschnitt senkrecht zu einer Längsrichtung (L) rechteckig und in dem tipseitigen Abschnitt (16) in einem Querschnitt senkrecht zur Längsrichtung (L) V-förmig ausgebildet ist.

3. Rotorblatt (1) nach Anspruch 1 oder 2,
**dadurch gekennzeichnet, dass** sich Querschnitte vom rechteckigen zum V-förmigen Querschnitt stetig über einen U-förmigen Querschnitt verändern.

4. Rotorblatt (1) nach einem der Ansprüche 1, 2 oder 3,
**dadurch gekennzeichnet, dass** der Hinterkantenstreifen (9) mindestens im wurzelseitigen Abschnitt (12) bereichsweise eine Biegeversteifung in Längsrichtung (L) aufweist.

5. Rotorblatt (1) nach Anspruch 4, **dadurch gekennzeichnet, dass** die Beigeversteifung als Sandwichkern (21) ausgebildet ist.

6. Rotorblatt (1) nach einem der vorstehenden Ansprüche,
**dadurch gekennzeichnet, dass** der Hinterkantenstreifen (9) mehrlagig aufgebaut ist und zumindest eine ±45°-Gelegelage (22), (23), (24), (25) und mindestens bereichsweise eine UD-Lage (26) (27) aufweist.

7. Rotorblatt (1) nach Anspruch 6,
**dadurch gekennzeichnet, dass** auf beiden Seiten des Sandwichkernes (21) zumindest eine UD-Lage (26), (27) und wenigstens zwei unmittelbar aufeinanderliegende ±45°-Gelegelagen (22), (23), (24), (25) angeordnet sind.

8. Verfahren zur Fertigung eines Rotorblattes (1) mit einer Rotorblatthinterkante (6), die in einem wurzelseitigen Abschnitt (12) ein abgeschnittenes Profil (14) mit einer Profilhinterkante (13) und in einem tipseitigen Abschnitt(16) ein spitz auslaufendes Profil (17) aufweist, wobei eine saugseitige Rotorblattteilschale (2) einen saugseitigen Teil der Profilhinterkante (13) und eine druckseitige Rotorblattteilschale (3) einen druckseitigen Teil der Profilhinterkante (13) aufweist und eine Verklebungslinie (8) entlang der Rotorblatthinterkante (6) zwischen den Rotorblattteilschalen (2, 3) ausgebildet ist, indem
die saugseitige und die druckseitige Rotorblattteilschale (2, 3) gefertigt werden,
die Rotorblattteilschalen (2, 3) entlang der Verklebungslinie (8) aufeinandergefügt werden,
innenseitig entlang der Verklebungslinie (8) beider Rotorblattteilschalen (2, 3) ein Hinterkantenstreifen (9) angeordnet wird,
der Hinterkantenstreifen (9) mit Seilen (41) verbunden wird, die quer durch die Verklebungslinie (8) von innen nach außen gezogen werden,
der Hinterkantenstreifen (9) mittels der Seile (41) an die Innenseiten beider Rotorblatteilschalen (2, 3) gezogen wird,
der Hinterkantenstreifen (9) an die Innenseiten der Rotorblatteilschalen (2, 3) geklebt wird.

9. Verfahren nach Anspruch 8,
**dadurch gekennzeichnet, dass** der Hinterkantenstreifen (9) in einer Längsrichtung (L) mit voneinander beabstandeten Löchern (40) versehen wird, durch die jeweils ein Seilende gezogen wird, das jeweils innenseitig mit einem Knebel (42) verknotet wird, und das jeweils andere Seilende durch die Verklebungslinie (8) hindurchgezogen wird und mit einem Aktuator (44) verbunden wird.

10. Verfahren nach Anspruch 9,
**dadurch gekennzeichnet, dass** der Aktuator (44) über einen Flaschenzug mit dem anderen Seilende verbunden wird.

11. Montageanordnung mit
einem Rotorblatt (1) mit einer Rotorblatthinterkante (6), die in einem wurzelseitigen Abschnitt (12) ein abgeschnittenes Profil (14) mit einer Profilhinterkante (13) und in einem tipseitigen Abschnitt (16) ein spitz auslaufendes Profil (17) aufweist, wobei eine saugseitige Rotorblattteilschale (2) einen saugseitigen Teil der Profilhinterkante (13) und eine druckseitige Rotorblattteilschale (3) einen druckseitigen Teil der Profilhinterkante (13) aufweist und eine Verklebungslinie (8) entlang der Rotorblatthinterkante (6) zwischen den Rotorblattteilschalen (2, 3) ausgebildet ist, einem Hinterkantenstreifen (9) mit einer Außenseitenkontur, die vollflächig einer Innenseitenkontur der Rotorblattteilschalen (2, 3) entlang der Verklebungslinie (8) angepasst ist,
mit einer Mehrzahl von entlang des Hinterkantenstreifens (9) in den Hinterkantenstreifen (9) eingebrachten Löchern (40), durch die jeweils ein Seil (41) gezogen ist, das innenseitig mit einem Knebel (42) versehen und außenseitig mit einem Aktuator (44) verbunden ist, wobei das Seil (41) durch die Verklebungslinie (8) von innen nach außen geführt ist und der Aktuator (44) ein Andrücken des Hinterkantenstreifens (9) an die Innenseiten der Rotorblattteilschalen (2, 3) ermöglicht.

12. Montageanordnung nach Anspruch 11,
**dadurch gekennzeichnet, dass** der Aktuator (44) über einen Flaschenzug mit einem äußeren Seilende verbunden ist.
